# EUROPEAN PATENT SPECIFICATION

(11) **EP 2 135 824 B1**
(45) Date of publication and mention of the grant of the patent: **18.05.2011**
(21) Application number: 08460025.3
(22) Date of filing: 18.06.2008
(51) Int. Cl.: B65G 23/06, B65G 39/07, F16H 55/38

(54) **Lagging system for frictional surface of driving element and a method of its manufacture**
Nachlaufsystem für die Reibfläche eines Antriebselements und Herstellungsverfahren dafür
Système retardateur pour surface frictionnelle d'un élément de commande et son procédé de fabrication

(43) Date of publication of application: 23.12.2009
(73) Proprietor: Linter Spólka z o.o., Lobzów 163 (PL)
(72) Inventor: Habryn, Andrzej, 32-340 Wolbrom (PL); Lakarczyk, Leszek, 32-340 Wolbrom (PL)
(74) Representative: Karczmitowicz, Teresa Ewa

(56) References cited:
- US-A- 3 392 594

## Description

The invention refers to the lagging systems used to increase friction between cooperating working surfaces.

Various systems of power or torque transmission, such as clutch, pulley in a belt conveyor, and the like, require high values of friction between two or more surfaces engaged in the transmission process. Ideal system would work without dissipation of energy lost in the forms of heat, induced electric charges or magnetic domains. However in real appliances all those undesired physical phenomena contribute to reduction of efficiency of the transmission system. Besides, the problem arises of evacuation of excessive heat and neutralisation of induced electric and magnetic charges. Particularly the heat and electric charges are of great importance from technical point of view. Excessive heat leads to rapid increase of temperature of working surfaces which reduces both efficiency and life-time of the transmission system, and in extreme cases may be responsible for a damage of the appliance. Induced electric charges generate electrostatic potentials which may be dangerous because of risk of spark or dark discharge and which may be transferred, e.g. through the belt surface in the belt conveyor, to other parts of the mechanism. Undesired potentials may interfere electric circuits and in effect they may lead to creation of false control data. In critical circumstances they may destroy electronics of the control systems.

The invention solves the problem of efficient evacuation of excessive heat and electric charges from the working surfaces to the mass.

Although the invention originates from a solution of described above technical problems faced in the belt conveyors technology, it may be applicable in other transmission systems, such as clutches with frictional surfaces.

In the belt conveyors a closed loop of flexible transporting band, made e.g. from a rubber vulcanised on a textile or woven wire canvas, is driven by a pulley. The torque transmission depends on value of friction between the pulley and the band. The higher the friction, the less the risk of loss of frictional engagement between the pulley and the band, which is particularly important at the moments of putting heavy loads on the conveyor and when they are transported on the band to the place of destination. High friction prevents from rolling of the belt on the pulley, resulting in lost motion due to functional disengagement of cooperating surfaces.

Various lagging systems are commonly used in the belt conveyors technology. To assure durability and mechanical resistance for wear, the lagging systems are usually made from ceramic materials embedded in vulcanised rubber. The lagging systems consist either of individual rubber-ceramic plates (commercially available from e.g. TIP-TOP Stahlgrubber) which are cold-glued to the face of the pulley, or of individual metal plates or backings coated with rubber-ceramic from outer side (offered by e.g. T-REX Rubber), which are welded or screwed, or in other way fastened to the pulley's surface. In some constructions the lagging elements are glued to the drum with polyurethane or epoxide resins.

In the above lagging systems the lagging elements are exposed to high transverse shearing forces, tangent to the face of the pulley. Because of the rubber or other soft material layer, the lagging members are relatively irresistant to these forces, while the resistance of the ceramic itself is higher by many orders of magnitude. One may conclude, that good parameters of the ceramic are lost in final product, at least if resistance of lagging system to transverse shearing forces is concerned. This reduces significantly both durability and life-time of the system. Besides, limited surface of contact between rubber-ceramic material of the lagging members and the pulley, in some embodiments additionally limited by isolating properties of resins used for fastening, causes accumulation of electrostatic charges and excessive heat on the pulley's working surface. Neither the heat nor the charges, both produced by friction between driving pulley and the belt, cannot be efficiently removed from the surface. There are no means to trasfer them to massive pulley and they rest trapped on the surface.

Different lagging systems for the pulleys of the belt conveyors are known from the patent documents. According to the patent applications WO0149590 and US2002046929 the lagging system for conveyor belt pulleys is provided that allows for significant flexibility in attaching lagging members to the face of the pulleys, while also providing improved distribution of the lagging material on the pulley. The lagging system can include lagging strips having a backing plate with rubber material bonded thereto, and which can carry lagging material such as ceramic tiles embedded therein. This solution is based on the concept of fastening the lagging members to the face of the pulley e.g. by screws, therefore the ceramic tiles, irrespective of their particular shape, have to be bonded to the backing plates playing a role of the bearing surfaces, with isolating rubber layer. In consequence the system is sensitive to the transverse shearing forces and is poorly effective in evacuation of excessive heat and electric charges, because the working frictional surfaces are practically isolated, thermally and electrically, from the pulley.

In another patent document JP62177359 a solution following similar concept is disclosed. The lagging system is provided on the outer peripheral part of the belt pulley. The base part of the lagging is made of a neoprene rubber. The same material is used for a number of additional strips formed along the base part, and rectangular tiles made e.g. from ceramic are placed on these strips in rows. Here also arises the same problem of low wear resistance and poor evacuation of heat and electric charges, both isolated from the pulley by a rubber base layer thickened by a rubber strip.

Also in the patent specification US4290761 the lagging body for the belt conveyor pulley comprises a wide and long rubber substrate and a number of rectangular or square small plate-like ceramic lagging elements aligned in the lateral and longitudinal directions and secured on the surface of rubber substrate. This lagging elastic plate may be used to cover whole face of the pulley or only its damaged part that requires quick repair. Nevertheless the same unsolved problems as discussed hereinbefore may appear.

In older constructions frictional surfaces were even loose on the pulley's face, and also the working surface was thermally and electrically isolated from the pulley or a drum. In the patent specification GB470261 dealing with belt or conveyor pulleys or rollers, friction clutches, brake drums and the like, the brake drum is provided with a friction covering, the ends of which are drawn together by a fastener, e.g. a trapezoidal buckle, the covering comprising a metal band faced with rubber, leather and lined with balata, leather, etc. The lining may be a loose ring, or the layers of the covering may be vulcanised, cemented or riveted together. The covering may be in two or more parts hinged together.

Some attempts have been made to facilitate exchange of damaged lagging members, making them slidable along special bars shaped on the pulley's face. In the patent specifications US5205796 and US5209704 this concept was applied to the wing pulleys. Replaceable pulley lagging for attachment to wing pulleys includes a backing member having a shape which conforms to the contact bars of each of the wings of the wing pulley. These backing members have an adhesive and an elastomeric member vulcanised thereto along the length thereof for contacting an endless conveyor belt disposed around a wing pulley. The replaceable pulley lagging devices can be slid onto or from the contact bars of the wing pulley. Naturally this solution may not be applied directly to the drum pulleys. Apart of that, this invention does not solve technical problem specified hereinbefore.

*Also in the patent specification* US3392594 *the wing pulley is provided with lagging members at its periphery. A plurality of radially extended, arcuately spaced wings have elongated, straight holders retaining elongated resilient lags therein. These lags have approximately the same length as their retainers and the holders where the retainers are fixed. The retainer of the holder has basically the same shape as the holder and it is V-shaped in cross section and includes a flat base and a pair of spaced, parallel sidewalls extended at right angles to the base. The retainer sidewalls terminate at their upper edges in semi-circularly formed flanges, the outer surfaces of which face outwardly thus forming grooves into which the holder inwardly inclined edges extend. The lag formed from a bar of resilient material, such as hard rubber, is substantially square in cross section. It is hold in place within the retainer by the retainer flanges edged into the lag sidewalls. This invention does not however answer the need of firm and mechanically resistant mounting of the lagging member, and it does not solve the problem of fastening of tough and rigid lags, e.g. ceramic lagging members.*

As may be concluded from the state of the art discussed above the problems of securing the lagging system from early wear and prolongation of its life, as well as the problems of increasing resistance to transverse shearing forces and providing efficient removal of excessive heat and induced electric charges, have not been solved by any invention comprised in the state of the art.

Some improvements in wear resistance and increase of friction in the belts for the conveyors were made. The patent document JP1252410 discloses a lagging member made of a hard abrasive raw material such as ceramic, with "I"-shaped (i.e. double T) cross section. The lagging member is embedded in a lining which coats the belt itself. External parts of the lagging members protrude from the lining, making frictional working surface. The abrasive wear of the lining and the belt itself is significantly reduced and the friction is increased.

In patent document JP62172080 similar solution of improved belt is disclosed, with the lagging members made from ceramic material shaped in cylindrical rods. The rods are coated with metallic film to increase adhesiveness and durability. The lagging members are embedded in elastic lining.

None of the latter two solutions may be applied to solve technical problems faced in frictional drivers, however. Still the lagging members are embedded in isolating, elastic support, which at the most may be fastened to the driver's face, likewise in the embodiment disclosed in the above discussed document GB470261.

It shall be noted that the state of the art teaches nothing about the lagging systems applied in the clutches with the lagging members fastened to the shell of the clutch plate but only to its outer surface.

The technical problem of providing a lagging system for frictional driver, which is resistant to transverse shearing forces, reduces lost motion and early wear, has prolongated life, and ensures efficient evacuation of excessive heat and electric charges produced on working surface of the driver, is solved by the invention disclosed hereinafter.

The idea of the invention is to move the lagging members from the face of the driver into the recesses made in its shell, with outer regions of the lagging members protruding outwards. These outer regions make the working frictional surface of frictional driver. By placing the lagging members in the recesses several effects are achieved. Firstly, the inner parts of the lagging members are secured in stiff material of the driver's shell. They cannot be separated from a rubber support, as is the case in solutions known from the state of the art, instead they are locked in the recesses. Secondly, they may be in direct contact with relatively big mass of the driver and the area of contact is high, being equal to the area of whole lagging member minus the area of its working surface protruding from the shell. Through the contact surface both excessive heat and electric charges can be removed easily into the driver and dissipated or neutralised.

The lagging system for frictional surface of driving element in a transmission unit consists of the lagging members, made preferably from ceramic profiles, e.g. trapezoidal ceramic rods, or ceramic components embedded in a carrier, preferably vulcanised rubber, or ceramic grains bound with a binder. These lagging members are combined with the bearing surface of the shell of the driving element by placing them in longitudinal recesses, or grooves, in the shell. The lagging members have a shape of longitudinal profiles with uniform cross section, corresponding to the shape of longitudinal recesses in the shell, made to receive the lagging members. Generally the cross section of the recess and that of the lagging member are of the same or similar shape, the latter slightly reduced to enable inserting the lagging member into the recess. The distal working surfaces of said lagging members protrude outwards from the recesses and the protruding parts form the working surface of frictional driver. General condition which shall be fulfilled to prevent the lagging element from moving outwards from the recess in the shell, is that minimum distance between distal edges of facing side walls of the recess is smaller than maximum distance between proximal edges of corresponding element of the lagging member. In other words there shall be a part of the lagging member wider than more distal part of the recess, the example is a trapezoidal lagging member in trapezoidal groove. The word "distal" means "closer to the shell surface" and the word "proximal" means "closer to the recess bottom". The meaning of these words shall be obvious if the shell is that of the pulley of the belt conveyor, then "distal" and "proximal" are referred to the pulley's axis of rotation.

In the lagging system at least some parts of facing side walls of the recess are convergent when seen from the bottom or proximal part of the recess towards its distal part or the surface of the shell. Whole walls of the recess may be convergent (e.g. in case of trapezoidal cross section), but convergence limited to only a part of the recess shall be sufficient to stop the lagging element in the groove.

The convergence may be realised in various ways: convergent parts of facing side walls of the recess may be stepped and/or convex and/or concave.

In the above described case, the parts of facing side walls of the lagging member corresponding to respective facing side walls of the recess are, respectively, stepped and/or concave and/or convex.

The lagging system described above may be slightly modified by making the width of the lagging member smaller than respective width of the recess, but still maximum width of the lagging member shall be higher than minimum width of the recess. In this case the lagging member is translated outwardly inside the recess, forming a cavity between corresponding bottom of the recess and that of the lagging member. The cavity is filled with filling material.

The filling material in the above disclosed modified embodiment is selected from flexible plate or rubber strip, or resin. In this embodiment the lagging member may resiliently react to external forces.

The recesses may be linear or curvilinear, or splined from linear or curvilinear segments, and/or they may be parallel, and/or they may be formed along whole or part of the shell.

The shell's shape generally is not limited. In preferred embodiments of the lagging system the shell is planar or spheroidal or conical, like in the clutch, or cylindrical like in the pulley of the belt conveyor.

A method of manufacture of the lagging system consists in that the recesses are milled in the shell or formed in casting or die-casting of the shell, and the lagging members are placed in the recesses. A void between the lagging member and the recess is optionally filled with a composition based on epoxide resin or poliurethane resin, or silicone resin, or polyester resin, or the void is filled with cement mortar or other mineral binder, or rubber, or metallic solder, or metallic band, or metallic wire. Optionally the cavity formed between corresponding bottom of the recess and that of the lagging member is filled with one of the above mentioned filling materials, or flexible plate, or rubber strip, or resin.

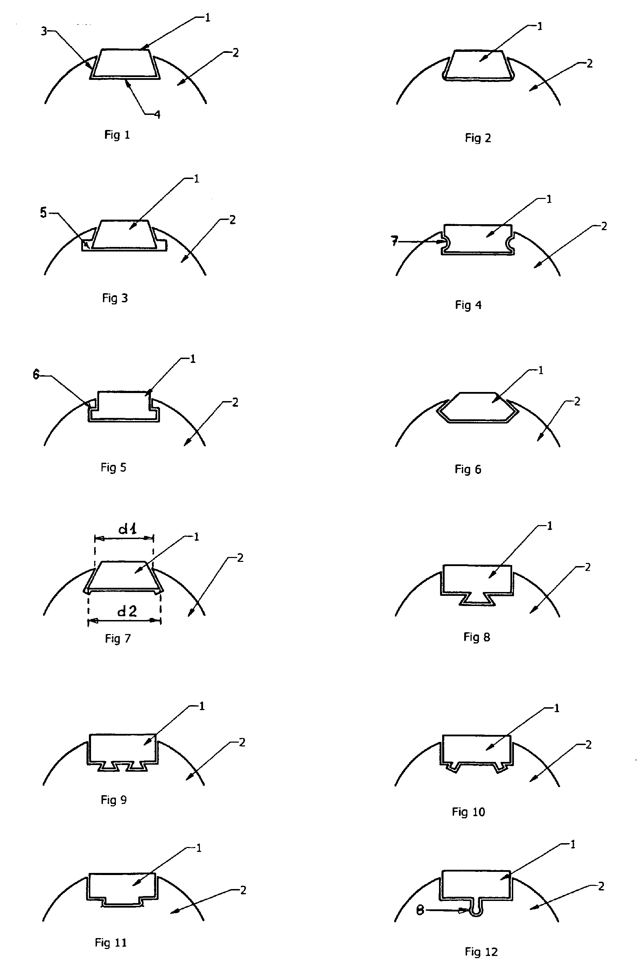

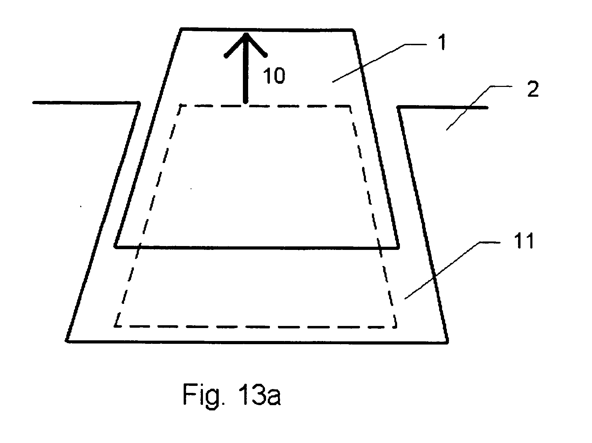

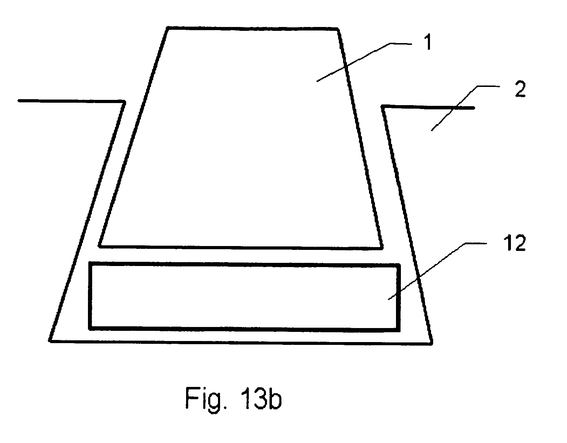

The lagging system according to the invention is schematically shown on the drawings, where Fig. 1-12 show cross sections of the recesses and corresponding lagging members in preferred embodiments, whereas Fig. 13a and Fig. 13b show alternative embodiment with displaced lagging member and filling element.

In one embodiment the lagging system for frictional surface of driving element in a transmission unit, consists of the lagging members, made preferably from ceramic profiles, e.g. trapezoidal ceramic rods, or ceramic components embedded in a carrier, preferably vulcanised rubber, or ceramic grains bound with a binder. The lagging members are combined with the bearing surface of the shell of the driving element. The lagging members (1) have a shape of longitudinal profiles with uniform cross section, corresponding to the shape of longitudinal recesses (5) in the shell (2), made to receive the lagging members. The distal working surfaces of said lagging members protrude outwards from the recesses. Minimum distance (d1) between distal edges of facing side walls (3, 6, 7, 8) of the recess is smaller than maximum distance (d2) between proximal edges of corresponding element of the lagging member, thus preventing the lagging element from moving outwards from the recess in the shell.

In the lagging system at least some parts of facing side walls of the recess (5) are convergent (3) when seen from the bottom (4) of the recess towards the surface of the shell (2). In basic embodiment shown in Fig. 1 both the recess and the lagging member have trapezoidal cross section. In general the cross sections may be of any shape (cf. Fig. 2-12), provided that blocking of the lagging member is realised in at least one region of the recess. The recesses and corresponding lagging members may be shaped with a "blocking root" where the lagging member is secured in its position in the driver's shell (Fig. 8-12).

*Special embodiments are illustrated on* *Figures 4, 5 and 8**-12, where outermost parts of the groove side walls, i.e. these making an edge with the driver external surface, are parallel. Obviously these parts of the recess may not secure the lagging member within the recess. However on each of these figures the lagging member has the "root", or "foot ", and one can easily find more distal parts of the groove side walls in the region of the root, which are separated less than the width of more proximal part of the lagging member corresponding root.*

In preferred embodiment of the lagging system at least some parts of facing side walls of the recess (5) are stepped (6) and/or convex (7) and/or concave (8). *Particularly in case of convex or concave surfaces, the edges of the recess which secure the lagging member within the groove, are rounded. This was illustrated in exemplary embodiments shown in* *Figures 2, 4 and 8**.*

According to the above described embodiment, the parts of facing side walls of the lagging member (1) corresponding to respective facing side walls of the recess (5) are stepped and/or concave and/or convex.

In alternative embodiment of the lagging system the width of the lagging member (1) is smaller than respective width of the recess (5), and the lagging member is translated (10) outwardly inside the recess, and the cavity (11) formed between corresponding bottom (4) of the recess and that of the lagging member is filled with filling material (12).

The filling material (12) in the above embodiment is selected from flexible plate or rubber strip, or resin.

The recesses (5) in the lagging system are linear or curvilinear, or splined from linear or curvilinear segments, and/or they are parallel, and/or they are formed along whole or part of the shell (2).

The shape of the shell (2) in the lagging system is preferably planar or spheroidal or conical, which is particularly useful in clutches, or it is cylindrical, like in the pulley of a belt conveyor.

The method of manufacture of the lagging system consists of a number of steps. The recesses (5) are milled in the shell (2) or formed in casting or die-casting of the shell. The lagging members (1) are placed in the recesses. A void between the lagging member and the recess is optionally filled with a composition based on epoxide resin or poliurethane resin, or silicone resin, or polyester resin, or the void is filled with cement mortar or other mineral binder, or rubber, or metallic solder, or metallic band, or metallic wire. Optionally the cavity (11) formed between corresponding bottom (4) of the recess and that of the lagging member is filled (12) with one of the above mentioned filling materials, or flexible plate, or rubber strip, or resin.

The lagging system according to this invention solves the technical problems discussed hereinbefore. It may be applied to various kinds of appliances where the power or torque shall be transmitted by frictional working surface of the driver. The latter may have any shape, e.g. planar, spheroidal, conical like the clutch plate, or cylindrical like the pulley of the belt conveyor. The lagging members are easily replaceable, in particular if no binding material is used to secure them in the recesses.

## Claims

1. A lagging system for frictional surface of driving element in a transmission unit, consisting of the lagging members *(1)*, made preferably from ceramic profiles or ceramic components embedded in a carrier, preferably vulcanised rubber, or ceramic grains bound with a binder, said lagging members combined with the bearing surface of the shell *(2)* of the driving element *and where* the lagging members (1) have a shape of longitudinal profiles with uniform cross section, corresponding to the shape of longitudinal recesses (5) in the shell (2), made to receive the lagging members, the distal working surfaces of said lagging members protruding outwards from the recesses, ***characterised in that** the* minimum distance (d1) between distal edges of facing side walls (3, 6, 7, 8) of the recess is smaller than *the* maximum distance (d2) between proximal edges of corresponding element of the lagging member, thus preventing the lagging element from moving outwards from the recess in the shell.

2. The lagging system according to claim 1 **characterised in that** at least some parts of facing side walls of the recess (5) are convergent (3) when seen from the bottom (4) of the recess towards the surface of the shell (2).

3. The lagging system according to any of preceding claims **characterised in that** at least some parts of facing side walls of the recess (5) are stepped (6) and/or convex (7) and/or concave (8).

4. The lagging system according to claim 3 **characterised in that** the parts of facing side walls of the lagging member (1) corresponding to respective facing side walls of the recess (5) are stepped and/or concave and/or convex.

5. The lagging system according to any of preceding claims **characterised in that** the width of the lagging member (1) is smaller than respective width of the recess (5), and the lagging member is translated (10) outwardly inside the recess, and the cavity (11) formed between corresponding bottom (4) of the recess and that of the lagging member is filled with filling material (12).

6. The lagging system according to claim 5 **characterised in that** the filling material (12) is selected from flexible plate or rubber strip, or resin.

7. The lagging system according to any of preceding claims **characterised in that** the recesses (5) are linear or curvilinear, or splined from linear or curvilinear segments, and/or they are parallel, and/or they are formed along whole or part of the shell (2).

8. The lagging system according to any of preceding claims **characterised in that** the shell (2) is planar or spheroidal, or conical, or cylindrical.

9. The lagging system according to claim 8 **characterised in that** the recesses (5) are formed in the shell (2) of a pulley of a belt conveyor.

10. A method of manufacture of the lagging system according to any of claims 1-9 **characterised in that** the recesses (5) are milled in the shell (2) or formed in casting or die-casting of the shell, and the lagging members (1) are placed in the recesses, and a void between the lagging member and the recess is optionally filled with a composition based on epoxide resin or poliurethane resin, or silicone resin, or polyester resin, or the void is filled with cement mortar or other mineral binder, or rubber, or metallic solder, or metallic band, or metallic wire, and optionally the cavity (11) formed between corresponding bottom (4) of the recess and that of the lagging member is filled (12) with one of the above mentioned filling materials, or flexible plate, or rubber strip, or resin.

## Patentansprüche

1. Verkleidungssystem für die Reibflächen des Antriebselements der Fördereinrichtung, bestehend aus den Verkleidungselementen (1), die vorzugsweise aus Keramikformteilen oder Keramikteilen gefertigt sind, die in einem Träger - am besten einem vulkanisierten Gummi oder mit einem Bindestoff verbundenen Keramikkörnern - eingenistet sind; die genannten Verkleidungselemente werden mit der Tragfläche des Belags (2) des Antriebselements verbunden, wo die Verkleidungselemente (1) die Gestalt länglicher Formteile mit einheitlichem Querschnitt haben, die der Form länglicher Aussparungen (5) im Belag (2) entsprechen, welche für die Aufnahme der Verkleidungselemente ausgeführt sind, wobei weitere Arbeitsflächen der genannten Verkleidungselemente aus den Aussparungen herausragen, **gekennzeichnet dadurch, dass** der Mindestabstand (d1) zwischen weiteren Stirnkanten der Aussparungsseitenwände (3, 6, 7, 8) kleiner als der max. Abstand (d2) zwischen den näherliegenden Kanten des entsprechenden Verkleidungselements ist, wodurch dem Herausrücken des Antriebselements aus der Aussparung im Belag verhindert wird.

2. Das Verkleidungssystem nach dem Patentanspruch 1, **gekennzeichnet dadurch, dass** zumindest gewisse Teile der Stirnseitenwänden der Aussparung (5) konvergent sind (3), von der Unterseite (4) der Aussparung zur Oberfläche des Belags (2) gesehen.

3. Das Verkleidungssystem nach einem der früheren Patentansprüche, **gekennzeichnet dadurch, dass** zumindest gewisse Teile der Stirnseitenwänden der Aussparung (5) abgestuft (6) und/oder konvex (7) und/oder konkav (8) sind.

4. Das Verkleidungssystem nach dem Patentanspruch 3, **gekennzeichnet dadurch, dass** Teile der Stirnseitenwänden des Verkleidungselements (1), die den entsprechenden Stirnseitenwänden der Aussparung (5) entsprechen, abgestuft und/oder konvex und/oder konkav sind.

5. Das Verkleidungssystem nach einem der früheren Patentansprüche, **gekennzeichnet dadurch, dass** die Breite des Verkleidungselements (1) kleiner als die Breite der Aussparung (5) ist, und das Verkleidungselement in der Aussparung nach außen verschoben ist (10), und die Nische (11), die zwischen dem entsprechenden Boden (4) der Aussparung und dem Boden des Verkleidungselementes gebildet wird, mit einem Füllstoff (12) ausgefüllt ist.

6. Das Verkleidungssystem nach dem Patentanspruch 5, **gekennzeichnet dadurch, dass** der Füllstoff (12) unter einer elastischer Platte oder einem Gummistreifen oder einem Harz gewählt wird.

7. Das Verkleidungssystem nach einem der früheren Patentansprüche, **gekennzeichnet dadurch, dass** die Aussparungen (5) geradlinig oder krummlinig sind, oder aus geradlinigen oder krummlinigen Abschnitten bestehen, und/oder parallel und/oder entlang ganzem oder einem Teil des Belags (2) gebildet sind.

8. Das Verkleidungssystem nach einem der früheren Patentansprüche, **gekennzeichnet dadurch, dass** der Belag (2) flach oder sphäroidal oder konisch oder zylindrisch ist.

9. Das Verkleidungssystem nach dem Patentanspruch 8, **gekennzeichnet dadurch, dass** die Aussparungen (5) im Belag (2) der Riemenscheibe des Bandförderers gebildet sind.

10. Das Herstellungsverfahren des Verkleidungssystems nach einem der Patentansprüche 1-9, **gekennzeichnet dadurch, dass** die Aussparungen (5) im Belag (2) ausgefräst sind, oder im Guss- oder Spritzformherstellungsverfahren des Belags gebildet werden, und die Verkleidungselemente (1) in die Aussparungen eingesetzt sind, und der Freiraum zwischen dem Verkleidungselement und der Aussparung optional mit einer Mischung gefüllt wird, die auf dem Epoxidharz oder dem Polyurethan-Harz oder dem Silikonharz oder dem Polyester-Harz basiert, oder der Freiraum mit einem Zementmörtel oder einem anderem Mineralbindestoff, oder einem Gummi, oder einem metallischem Lot, oder einem metallischem Band, oder einem Metalldraht gefüllt ist, und die Nische (11), die zwischen dem entsprechenden Boden (4) der Aussparung und dem Boden des Verkleidungselements optional mit einem der oben genannten Füllstoffe, oder einer elastischen Platte oder einem Gummistreifen oder einem Harz ausgefüllt ist (12).

## Revendications

1. Un système de revêtement utilisé sur la surface d'éléments d'entrainement, soumise aux efforts de friction, d'un dispositif de transmission (ex.: entrainement d'un convoyeur) est composé d'éléments de revêtement (1), fabriqués de préférence en profilés ou éléments céramiques, installés dans le support (fabriqué de préférence en caoutchouc vulcanisé) ou, en graines céramiques liées par un liant ; lesdits éléments de revêtement se combinent à la surface porteuse de l'axe (2) de l'élément d'entrainement et sont profilés longitudinalement, leur coupe transversale uniforme correspondant à la forme des évidements longitudinaux (5) pratiqués dans l'axe (2) ; ces évidements sont réalisés afin de recevoir les éléments de revêtement et les surfaces de service desdits éléments dépassent en saillie des évidements afin que, et se **caractérise par** le fait la distance minimale (d1) entre les bords distants des parois frontales et latérales (3, 6, 7, 8) des évidements soit inférieure à la distance maximale (d2) entre les bords rapprochés de la partie correspondante de l'élément de revêtement, empêchant par conséquent l'élément de revêtement de sortir de l'évidement pratiqué dans l'axe.

2. Le système de revêtement selon la revendication 1, se **caractérise par le fait qu'**au moins certaines parties des parois frontales et latérales de l'évidement (5) convergent (3), lorsqu'on les regarde depuis le bas (4) de l'évidement vers la surface de l'axe (2).

3. Le système de revêtement selon l'une des revendications précédentes, se **caractérise par le fait qu'**au moins certaines parties des parois frontales et latérales de l'évidement (5) sont étagées (6), convexes (7) et/ou concaves (8).

4. Le système de revêtement selon la revendication 3, se **caractérise par le fait que** les parties des parois frontales et latérales de l'élément de revêtement (1), correspondant aux parois latérales et frontales respectives de celui-ci (5), sont étagées, convexes et/ou concaves.

5. Le système de revêtement selon l'une des revendications précédentes, se **caractérise par le fait que** la largeur de l'élément de revêtement (1) est inférieure à la largeur respective de l'évidement (5) ; l'élément de revêtement se déplace (10) dans l'évidement vers l'extérieur et la cavité (11), formée par le fond (4) de l'évidement et celui de l'élément de revêtement, est remplie d'un matériau (12).

6. Le système de revêtement selon la revendication 5, se **caractérise par le fait que** le matériau de remplissage (12) est constitué, soit d'une plaque flexible, d'une bande de caoutchouc ou de résine.

7. Le système de revêtement selon l'une des revendications précédentes, se **caractérise par le fait que** les évidements (5) sont rectilignes, curvilignes, soient creusés en forme de tronçons rectilignes ou curvilignes, et/ou parallèles ou placés le long de la totalité ou d'une partie de l'axe (2).

8. Le système de revêtement selon l'une des revendications précédentes, se **caractérise par le fait que** l'axe (2) est, soit plan, soit conique, cylindrique ou sphérique.

9. Le système de revêtement selon la revendication 8, se **caractérise par le fait que** les évidements (5) sont usinés dans l'axe (2) d'une roulette d'un convoyeur.

10. Le système de revêtement selon l'une des revendications de 1 à 9, se **caractérise par le fait que** sa fabrication repose sur des évidements (5) fraisés dans l'axe (2) ou façonnés par moulage par injection sous pression de la roulette ; les éléments de revêtement (1) sont placés dans l'évidement et l'espace entre ces élément et l'évidement est rempli (optionnel) d'un composé à base de résine époxyde, de résine de polyuréthane, résine de silicone ou encore de résine de polyester ; l'espace peut également être rempli de mortier de béton ou de tout autre liant, caoutchouc, soudure métallique, bande métallique ou fil métallique ; la cavité (11), entre le fond de l'évidement correspondant (4) et celui de l'élément de revêtement, est remplie (12) à l'aide d'un des matériaux mentionnés ci-dessus, d'une plaque flexible, d'une bande de caoutchouc ou de résine.
